Europäisches Patentamt

**European Patent Office**

Office européen des brevets

(19)

(11) Veröffentlichungsnummer: **0 060 478**
**A2**

(12) # EUROPÄISCHE PATENTANMELDUNG

(21) Anmeldenummer: **82101810.8**

(22) Anmeldetag: **08.03.82**

(51) Int. Cl.³: **G 11 B 5/02,** G 11 B 5/28
**// G11B5/86**

(30) Priorität: **18.03.81 DE 3110597**

(43) Veröffentlichungstag der Anmeldung: **22.09.82**
**Patentblatt 82/38**

(84) Benannte Vertragsstaaten: **DE FR GB IT**

(71) Anmelder: **AGFA-GEVAERT Aktiengesellschaft,**
**D-5090 Leverkusen 1 (DE)**

(72) Erfinder: **Koller, Albrecht, Dr., Ammergaustrasse 20,**
**D-8000 München 70 (DE)**

(54) **Verfahren zur Aufzeichnung und Wiedergabe von elektrischen Signalen auf magnetische Schichten in Vielspurtechnik.**

(57) Die Erfindung betrifft ein Aufzeichnungs- und Wiedergabeverfahren für magnetische Aufzeichnungsträger, bei dem hohe Spurzahlen realisierbar sind. Die Information wird in der magnetischen Schicht des Aufzeichnungsträgers in gleichgroßen Flächenelementen niedergelegt, deren Längs- und Querdimension von etwa gleicher Größenordnung sind und die in Richtung der Relativbewegung in parallelen Reihen so angeordnet sind, daß zusammengehörige Flächenelemente sprossenartig quer zu den Reihen liegen. Die Wandlerstationen bestehen aus magnetischen Registern, deren einzelne Speicherzellen nach Größe, Form und Anordnung der Sprossen der Information auf dem Aufzeichnungsträger entsprechen. Die Übertragung der Information vom Aufzeichnungsträger auf das magnetische Register einer Wandlerstation oder umgekehrt erfolgt durch einen anhysteretischen Kopiereffekt, also durch Einwirkung von Wechselfeld oder von thermischer Energie auf die magnetische Kontaktzone zwischen magnetischer Speicherfläche und Wandlerregister.

- 1 -

AGFA-GEVAERT
AKTIENGESELLSCHAFT
Patentabteilung

5090 Leverkusen, Bayerwerk

Dr.AS-gö

Verfahren zur Aufzeichnung und Wiedergabe von elektrischen
Signalen auf magnetische Schichten in Vielspurtechnik

Die Erfindung betrifft ein Verfahren, mit dem rasch in
einem Kanal einlaufende elektrische Signale auf viele
Kanäle verteilt in parallelen magnetischen Spuren aufgezeichnet werden können und mit dem umgekehrt die aufgezeichnete Information in elektrische Werte verwandelt und
zur ursprünglichen Signalfolge zusammengesetzt werden kann.

Die Speicherung von elektrischen Signalen auf magnetischen
Schichten ist eine wohlbekannte Technik, deren Leistungsfähigkeit in den vergangenen 50 Jahren erheblich gesteigert
wurde. So ist es Stand der Technik, Fernsehbildsignale
(Videosignale) mit mehr als 5 Mio. Informationen pro Sekunde
auf Magnetband aufzuzeichnen. Dies ist gelungen, weil im
gleichen Zeitraum die Speicherdichte wesentlich erhöht wurde.
Zur Zeit wird eine Informationseinheit eines Videosignals auf einer
Bandfläche von ca. 1 $\mu$ x 50 $\mu$ niedergelegt. Eine weitere
Steigerung stößt auf Schwierigkeiten, vor allem bei der
Dimension 1 $\mu$ in der Richtung, die der Relativbewegung zwischen magnetischer Schicht und elektromagnetischem Wandler entspricht. Da dieser Wert aus einer Reihe von Gründen heute noch nicht wesentlich verkleinert werden kann, muß die genannte Relativbewegung mindestens $1 \mu \times 5 \times 10^6$/Sek., also 5 m/s betragen. Alle heute realisierten Videosysteme benützen Abtastgeschwindigkeiten von ca. 5 m/s und mehr. Dabei wurden bereits zu Beginn dieser Aufzeichnungsart zwei Wege beschritten: Entweder arbeitet man mit mäßiger Bandgeschwindigkeit und läßt den Wandler sich relativ schnell bewegen. Diese Lösung hat sich bei der professionellen Anwendung vollständig und bei der Amateuranwendung hauptsächlich durchgesetzt. Nachteilig dabei ist die komplizierte Mechanik und Steuerelektronik, die nötig ist, um den Kopf so präzise zu bewegen, daß die Signalzuordnung ungestört erhalten bleibt. Während bei ortsfesten Studiogeräten diese Problematik zu hochqualifizierten, aber teueren Lösungen zwang, verhinderte sie bis heute eine einfache und leichte Gerätebauart, die in der Amateuranwendung wünschenswert wäre und eine Ablösung des fotografischen Filmens ermöglichen würde. Der zweite mögliche Weg ist die feste Positionierung des Abtastkopfes und die schnelle Bewegung des Magnetbandes. Solche Längsspuraufzeichnungsverfahren wurden von verschiedener Seite vorgeschlagen. Hier erwies sich als nachteilig, daß ausreichende Spielzeiten nur dadurch gewonnen werden, daß mehrere Signalspuren nacheinander und nebeneinander auf das Magnetband geschrieben werden. Geht man von einem Bandstück fester Länge aus, so bedeutet dies Abstoppen und Richtungsumkehr des Bandlaufs mit der Folge eines wenn auch kurzen Signalausfalls. Ein anderer Vorschlag verwendet ein sogenanntes Endlosband, auf dem die Spuren in vielen Durchläufen der Bandschlinge spiralig angeordnet sind. Hier führt die Notwendigkeit, ein spezielles Magnetband mit besonderen Gleiteigenschaften zu benutzen, zu technischen Schwierigkeiten. Der Idealfall eines feststehenden Wandlers und einer mäßigen Vorschubgeschwindigkeit läßt sich nur realisieren, wenn man den Informationsfluß,

AG 1776

0060478

der in einem Kanal ca. 5 Mio. Daten pro Sekunde beträgt, auf n gleichzeitig fließende Kanäle, mit dem jeweils um den Faktor n reduzierten Datenfluß verteilt. Damit würde sich die Relativgeschwindigkeit zwischen Wandler und Magnetschicht ebenfalls um den Faktor n reduzieren. Grob abgeschätzt gilt für die Relativgeschwindigkeit $v_{Rel}$ bei Videoaufzeichnung $v_{Rel} = \dfrac{\lambda \times 500}{n}$ cm/s, wobei $\lambda$ = aufgezeichnete Signalwellenlänge in Mikron und n = Kanalzahl, entsprechend der Zahl der gleichzeitig aufgezeichneten Spuren.

Ein anderer Anwendungsfall der magnetischen Signalaufzeichnung, bei der ein hoher Informationsfluß verarbeitet werden muß, ist die Aufzeichnung von Tonsignalen in digitaler Technik. Wie aus physikalischen Gründen und aus praktischen Anwendungen hervorgeht, lassen sich mit dieser Technik besonders vollkommene Tonaufzeichnungen herstellen. Überdies entfällt hier die Problematik der Arbeitspunktfestlegung, die bei der Aufzeichnung in Analogtechnik zu einer für den Kunden schwer zu übersehenden Vielfalt von Bandtypen geführt hat. Der Informationsfluß bei der genannten Digitaltechnik (Audio - Digital) liegt niedriger als bei der Videoanwendung, aber wesentlich höher als bei der Audio-Analogtechnik. Man benötigt etwa die Aufzeichnung von 30 000 digitalen Wörtern pro Sek. mit jeweils etwa 16 Stufen (bits), um die Vorteile der digitalen Technik ausschöpfen zu können. Berücksichtigt man Stereotechnik in zwei Kanälen, so erhält man einen Informationsfluß von etwa 1 Mio. pro Sekunde. Um mäßige Relativgeschwindigkeiten zu erhalten, bietet sich auch hier der Weg der Unterteilung in n Kanäle an. Man erhält analog zu Video:

$$v_{Rel} = \dfrac{\times 100}{n} \text{ cm/s}$$

Nach diesen Angaben läßt sich eine mäßige Relativgeschwindigkeit durch Reduzierung der aufgezeichneten Wellenlänge erreichen. Wie bereits erwähnt, stößt man hierbei auf tech-

AG 1776

nische Grenzen. Die Gründe dazu sind bekannt: 0060478
Die Selbstentmagnetisierung durch den geringen Polabstand senkt die aufgezeichnete Magnetisierung. Man sucht Abhilfe durch Erhöhung der Koerzitivkraft zu finden, handelt sich damit jedoch Probleme bei der nötigen Felderhöhung für die Löschung und Aufzeichnung ein. Die Aufzeichnung mit zur Speicherschichtfläche senkrecht gerichteter Magnetisierung verhindert zwar die Selbstentmagnetisierung, ist aber technisch noch nicht ausgereift.

Die Abtastung kurzer Wellenlängen ist höchst empfindlich gegen Schwankungen des Kontaktes zwischen Speicherschichtfläche und Wandler, da die Reichweite der Streufelder ebenfalls kurz ist. Nur höchste Oberflächenqualität und Sauberkeit führen zu brauchbaren Signalpegeln und Fehlerraten.

Die endliche Spaltbreite eines üblichen Wandlers reduziert das abgelesene Signal weiterhin, sobald das Streufeld benachbarter Pole mit erfaßt wird.
Die Aufzeichnung kurzer Wellenlängen muß mit konstanter Ortsphase in der ganzen Tiefe der magnetischen Schicht erfolgen, damit keine Auslöschung durch Interferenz eintritt.
Die genannten Gründe begrenzen zum gegenwärtigen Zeitpunkt die Wellenlänge aufgezeichneter Signale auf etwa 1 $\mu$, vor allem wegen der erforderlichen Oberflächenqualitäten und Spaltbreiten. Gerade das Problem des Kopfkontaktes führt zu weiteren Schwierigkeiten mit Reibungs- und Abriebphänomenen. Eine deutliche Verschiebung dieser technischen Grenze in den Submikron-Bereich ohne Verluste an der Robustheit und Störungsunempfindlichkeit des Aufzeichnungsverfahrens ist auf längere Sicht nicht zu erwarten. Im Gegenteil wäre es sehr wünschenswert, bei Wellenlängen des 10 $\mu$-Bereiches arbeiten zu können, da die Technologie dieser Größenordnung problemlos beherrscht wird. Sogar die Abtastung und Aufzeichnung ohne körperlichen Kontakt zwischen Wandler und Speicherschichtoberfläche wäre reali-

AG 1776

sierbar mit großem Gewinn für Lebensdauer und Fehlersicherheit.

Nach den angegebenen groben Abschätzungen kann man diesen Wellenlängenbereich nur nutzen, ohne die Relativgeschwindigkeit unzumutbar zu steigern, wenn die Spurzahl n zwei Größenordnungen erreicht, also bei mindestens 100 liegen würde. Damit sinkt wegen der Einhaltung einer vernünftigen Querdimension des Aufzeichnungsträgers auch die Spurbreite in den Bereich von 10 $\mu$. Die Realisierung solcher Spurzahlen ist beim Stand der Technik nicht abzusehen: Die Miniaturisierung von Wandlern herkömmlicher Bauart mit Spalten und Spulen ist sehr kompliziert und teuer. Neuartige Leseköpfe, die das Prinzip des magnetoresistiven Effektes nutzen, sind in Entwicklung. Allen Lösungen ist bisher die Notwendigkeit gemeinsam, pro Kanal oder Spur einen Wandlerverstärker vorzusehen, um über die nötige Strom- oder Spannungsverstärkung beim Schreiben oder Lesen zu verfügen. Während die notwendige Umsetzung zwischen seriellem einkanaligen und parallelem n-kanaligen Datenfluß auf elektronischem Wege keine Schwierigkeiten macht, stellt die Integration von Verstärkern in Zahlen von 100 die Vielspurtechnik ebenfalls vor Probleme.

Der Erfindung liegt daher die Aufgabe zugrunde, ein Aufzeichnungsverfahren für magnetische Aufzeichnungsträger zu schaffen, bei dem hohe Spurzahlen realisierbar sind.

Erfindungsgemäß wird diese Aufgabe gelöst durch die kombinierte Anwendung folgender Verfahrensstufen:

Die Information wird in der magnetischen Schicht des Aufzeichnungsträgers in gleichgroßen Flächenelementen niedergelegt, deren Längs- und Querdimension von etwa gleicher Größenordnung sind und die in Richtung der Relativbewegung

AG 1776

in parallelen Reihen so angeordnet sind, daß zusammengehörige Flächenelemente sprossenartig quer zu den Reihen
liegen.

Die Wandlerstationen bestehen aus magnetischen Registern,
deren einzelne Speicherzellen nach Größe, Form und Anordnung
der Sprossen der Information auf dem Aufzeichnungsträger
entsprechen.

Die Übertragung der Information vom Aufzeichnungsträger auf
das magnetische Register einer Wandlerstation oder umgekehrt
erfolgt durch einen anhysteretischen Kopiereffekt, also
durch Einwirkung von Wechselfeld oder von thermischer Energie
auf die magnetische Kontaktzone zwischen magnetischer
Speicherfläche und Wandlerregister.

Die Merkmale der Erfindung sind im Detail in der Beschreibung
und den Ansprüchen niedergelegt.

Die Erfindung wird im Nachstehenden näher erläutert in
Verbindung mit Zeichnungen, und zwar zeigen

Figur 1 eine Anordnung der Speicherelemente auf dem Aufzeichnungsträger in rechteckiger Form,

Figur 2 die gleiche Anordnung wie in Figur 1, jedoch in
runder Form,

Figur 3 eine herkömmliche Videoschrägspuraufzeichnung,

Figur 4 die Ansicht eines Magnetkopfes üblicher Bauart zur
Wechselfeldbeeinflussung,

Figur 5 die Aufsicht auf ein magnetisches Register mit
Leiterbahnen zur Erzeugung des Signalfeldes,

AG 1776

Figur 6 die Aufzeichnung der Abschirmung des magnetischen Registers gegenüber dem Wechselfeld durch eine leitfähige Zwischenschicht,

Figur 7 das Diagramm der Zeitfolge der Informationsübertragung durch ein inhomogenes Wechselfeld,

Figur 8 die Ansicht eines Magnetkopfes mit keilförmigem Spaltverlauf,

Figur 9 das Diagramm einer Zeitfolge der Informationsübertragung durch unterschiedliche Koerzitivkräfte,

Figur 10 die Aufsicht eines magnetischen Registers mit getrennten Leseschleifen,

Figur 11 die Ansicht eines magnetischen Registers mit einer gemeinsamen Leseschleife und

Figur 12 die Ansicht einer Strombahn mit unterschiedlichem, stufenförmig verlaufendem Querschnitt.

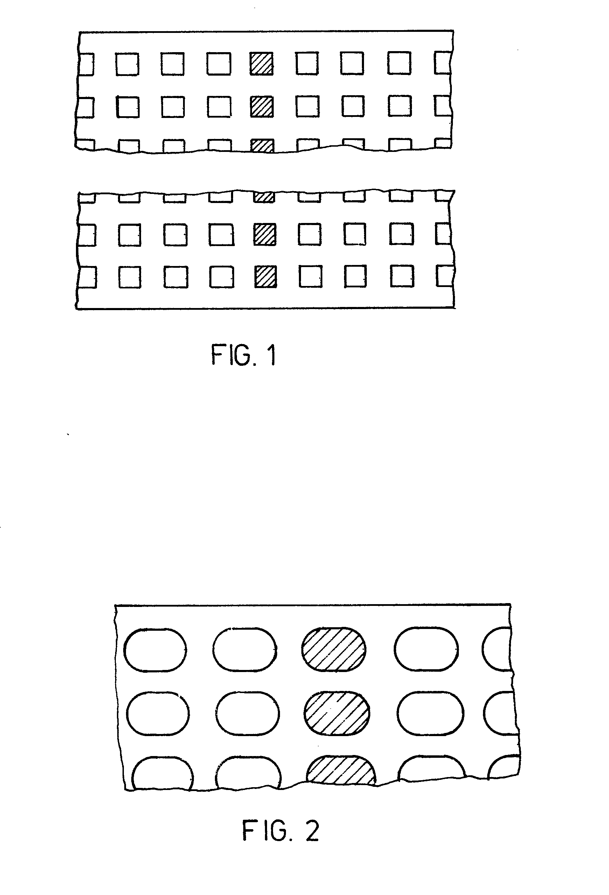

Zunächst die Anordnung der Information auf der Fläche des magnetischen Speichers, der z. B. ein Magnetband oder eine Magnetkarte sein kann. Jedes zeitabhängige, elektrische Signal kann durch Abfragen in äquidistanten Zeitintervallen in eine diskrete Folge von Signalwerten verwandelt werden. Jeder Signalwert kann als analoger Spannungswert oder nach Bearbeitung durch einen sogenannten Analogdigitalwandler als Gruppe von zweiwertigen logischen Informationen (bits) vorliegen. Jedem analogen Spannungswert oder logischem bit ist ein Speicherflächenelement zugeordnet, das rechteckig (Figur 1) oder rund (Figur 2) ausgeführt ist, in beiden flächigen Koordinatenrichtungen etwa gleiche Dimension besitzt, nämlich in der Größenordnung von jeweils 10 $\mu$, und das die Information als Magnetisierung enthält. Die Elemente

AG 1776

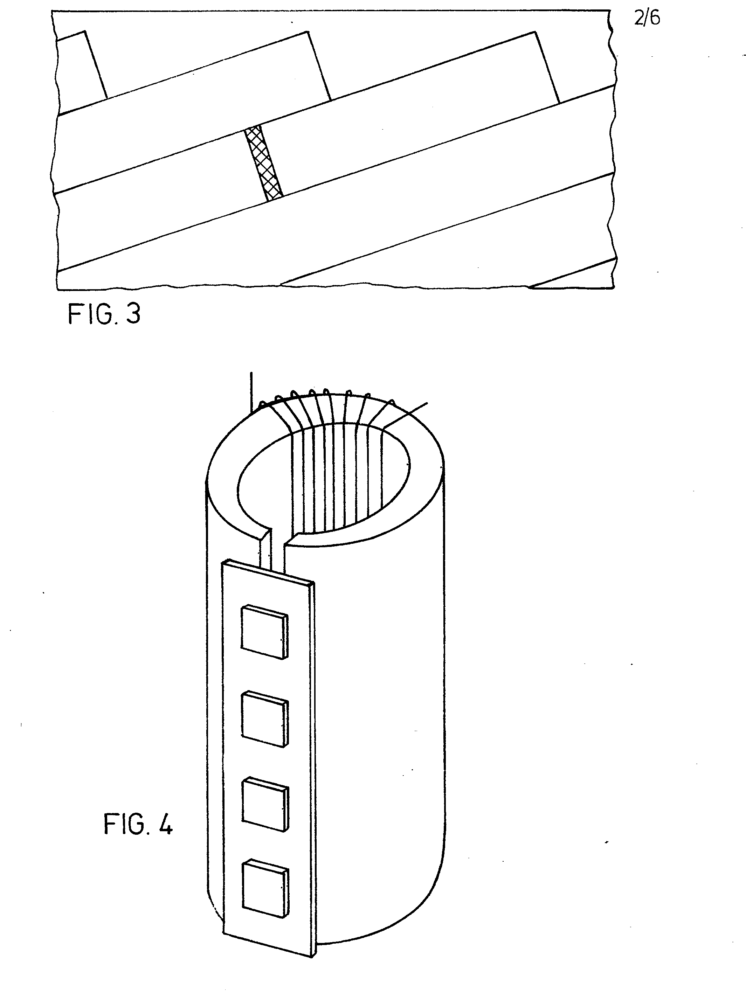

gemäß Figur 1 oder 2 können sich berühren, also dicht an dicht liegen, wobei die Magnetisierung am Rande der Elemente in einer Übergangszone dem benachbarten Wert zustrebt. Im Falle einer Analogaufzeichnung entspricht die Stärke der Magnetisierung dem analogen Spannungswert des elektrischen Signals, das im betrachteten Element gespeichert wird. Bei digitaler Aufzeichnung ist die Information in der Magnetisierungsrichtung enthalten. Im Vergleich zu herkömmlichen Aufzeichnungssystemen erkennt man den Vorzug der erfindungsgemäßen Lösung. In der erfindungsgemäßen Anordnung bleibt der Speicherflächenbedarf unverändert, z. B. bei Elementen von einer 7 x 7 /u großen Ausdehnung, während die Zahl einer Amateurvideoaufzeichnung der Helligkeitswert eines Bildpunktes des Fernsehbildes auf einer Speicherfläche von ca. 1 /u x 50 /u niedergelegt ist, wie aus Figur 3 ersichtlich ist. Das Streufeld eines erfindungsgemäßen Elementes reicht jedoch deutlich weiter als das der 1 /u x 50 /u-Anordnung mit der Folge, daß die Anforderungen an die Kontaktoberflächen von Aufzeichnungsträger und Wandler unkritisch werden bis hin zur Möglichkeit der kontaktlosen Abtastung.

Die Anordnung der Speicherflächenelemente wird so gewählt, daß die nach Umwandlung des seriellen Signals in parallelen Kanälen gleichzeitig anstehende Signale in einer Sprosse von Elementen quer zur Relativbewegung niedergelegt werden, so daß eine dichte, etwa orthogonale Belegung der zur Verfügung stehenden Fläche mit Speicherelementen entsteht (Figur 1 gestrichelt). Dabei sind in Querrichtung, wie vorstehend aufgezeigt, 100 oder mehr Elemente angeordnet. Die Größe der Speicherelemente gestattet die Verwendung von relativ niederkoerzitivem magnetischem Material mit ca. 24 kAm$^{-1}$. Das Beschreiben des Aufzeichnungsträgers oder das Auslesen der gespeicherten Information wird vorzugsweise gleichzeitig für eine ganze Sprosse von Speicherelementen vorgenommen. Nach Abschluß dieses Vorganges kann durch Bewegung

AG 1776

des Wandlers oder des Aufzeichnungsträgers eine neue Sprosse geschrieben bzw. gelesen werden. Entsprechend eines weiteren Grundgedankens der Erfindung besteht der Wandler aus einer Folge von magnetischen Speicherelementen, die nach Größe und Art deckungsgleich mit einer Informationssprosse (Register) sind. Im Grenzfall können die einzelnen Elemente des Registers ineinander übergehen, so daß ein durchgehender Streifen magnetischen Materials in der Größe entsprechend der äußeren Form einer Sprosse entsteht. Die Speicherelemente des Registers können aus einem unmagnetischen Substrat, z. B. Glas, und einer magnetischen Beschichtung, z. B. einer Permalloy-Legierung, bestehen, die durch Aufdampfen und Ätzen in die gewünschte Sprossenform gebracht wurde. Eine geeignete magnetische Hysterese ermöglicht die Speicherung von Information ähnlich wie bei der magnetischen Schicht des Aufzeichnungsträgers. Bei scharf rechteckiger Hystereseschleife für die einzelnen Elemente können nur zweiwertige digitale Daten gespeichert werden. Durch Aufbringen verschiedener magnetischer Phasen sind auch Informationen in mehrwertiger Logik speicherbar. Bei einer gewissen Breite der Koerzitivkraftverteilung, z. B. 10 % des mittleren Koerzitivkraftwertes, können analoge Signalwerte eingeschrieben werden. Eine vorhandene Vorzugsrichtung muß die gleiche Richtung aufweisen wie die im Aufzeichnungsträger vorliegende Magnetisierungsrichtung. Bezüglich der Übertragung der Information zwischen den deckungsgleichen Sprossen des Wandlers und des Aufzeichnungsträgers gilt Folgendes: Bekanntlich läßt sich ein Magnetisierungsmuster von einer Schicht (Vorlage) in eine zweite (Kopie) übertragen, wenn die Koerzitivkraft der entstehenden Kopie während des Vorganges überwunden wird. Dies ist auf zwei Wegen möglich: Einmal die Anwendung eines Wechselfeldes, dessen maximale Amplitude über der Koerzitivkraft der Kopie, aber unterhalb der der Vorlage liegt. Wenn Vorlage und Kopie in engem magnetischen Kontakt liegen und ein solches Wechselfeld mit der genannten Amplitude auf die Kopie wirkt, so entsteht nach Abklingen des Wechselfeldes unter

AG 1776

dem Einfluß des Streufeldes der Vorlage eine spiegelbildliche Kopie des Magnetisierungsmusters der Vorlage. Das Abklingen der Feldwirkung kann durch Bewegung der Kontaktzone durch ein lokales Feldgebiet oder durch langsames Abschalten des wirkenden Feldes auch bei unbewegter Kontaktzone erfolgen. Dabei muß die Frequenz des Wechselfeldes hoch genug sein bzw. die Relativbewegung langsam genug, damit das Spiegelbild möglichst verzerrungsfrei ist. Die einzelnen einzuhaltenden Grenzen hängen von der Rechteckigkeit der Hystereseschleife der Kopie ab. Als Richtwert kann man vorschreiben, daß sich die Wechselfeldamplitude während einer vollen Periode um weniger als 10 % der Koerzitivkraft verringert. Ferner muß bei diesem Verfahren ein deutlicher Koerzitivkraftunterschied, dessen Größe ebenfalls von der Rechteckigkeit der Hystereseschleife abhängt, zwischen Vorlage und Kopie herrschen, sonst ist der Übertragungsvorgang nach Richtung und Qualität gestört. Der zweite Weg zur Übertragung der Information ist die Verwendung magnetischen Materials mit unterschiedlichem Curie-Punkt für Vorlage und Kopie. Statt einer Wechselfeldanwendung wird die Kopie über ihren niedrigeren Curie-Punkt erwärmt und unter dem Einfluß des Streufeldes der Information der Vorlage wieder abgekühlt. In beiden Fällen kann der Unterschied der Kenngrößen von Kopie und Vorlage (Koerzitivkraft oder Curie-Punkt) entfallen, wenn durch geeignete Abschirmmaßnahmen die Wirkung der Größe, die die Koerzitivkraft der Kopie überwindet, von der Vorlage ferngehalten wird. Für den Fall der Aufzeichnung von digitaler zweiwertiger logischer Information lassen sich verschiedene Ausführungsformen eines Wandlers beschreiben. Der Fall analoger oder mehrstufiger Signalspeicherung läßt sich mit Hilfe des erfindungsgemäßen Verfahrens ebenfalls lösen. Entsprechend dem beschriebenen Kopiervorgang muß die aufzuzeichnende Information als Folge von Signalfeldern der gewünschten Größe und Geometrie vorliegen. Durch parallele Einwirkung eines Wechselfeldes oder eine kurzzeitige Erwärmung des Materials der Kopie längs einer ganzen Informationssprosse wird das System der Signalfelder spiegel-

AG 1776

bildlich in den Aufzeichnungsträger als Magnetisierungssystem eingeschrieben. Die parallele Übertragung kann durch einen Magnetkopf üblicher Bauart, z. B. durch einen Ringkernkopf entsprechend Figur 4, erfolgen, der entweder durch den Aufzeichnungsträger hindurch oder durch den Wandler hindurch die Speicherschicht in voller Länge seines Spaltes beeinflußt. Der Übertragungsimpuls läßt sich als schnell ansteigender und langsam abfallender Burst eines Wechselstromes hoher Frequenz vorstellen, der durch die Wicklung des Magnetkopfes fließt. Wegen der hohen Grenzfrequenz der in üblichen magnetischen Speichermedien eingesetzten magnetischen Materialien kann die Wechselfeldfrequenz so hoch gewählt werden, daß die Übernahme der Information im Verlauf weniger $\mu$-Sekunden stattfindet, so daß die Bewegung des Aufzeichnungsträgers während der Übernahme vernachlässigt werden kann. Die nötige Feldabnahme kann auch durch die Bewegung des Aufzeichnungsträgers in einem sehr inhomogenen Feld erzeugt werden. In diesem Fall läßt sich mit konstanter Wechselstromamplitude arbeiten.

Ein weiteres Ausführungsbeispiel ist die Erwärmung der ganzen Zone des Aufzeichnungsträgers, auf die eine Informationssprosse niedergelegt wird. Verwendet man ein Material mit niedrigem Curie-Punkt in der Magnetschicht, z. B. Chromdioxid ($T_c = 116\ ^oC$), so ist eine rasche Erwärmung und Abkühlung im Durchgang durch eine schmale Hitzezone oder die Erwärmung der Sprosse durch eine Strahlungsquelle, wie z. B. einem Laser, die kontinuierlich oder gepulst arbeitet, durchführbar.

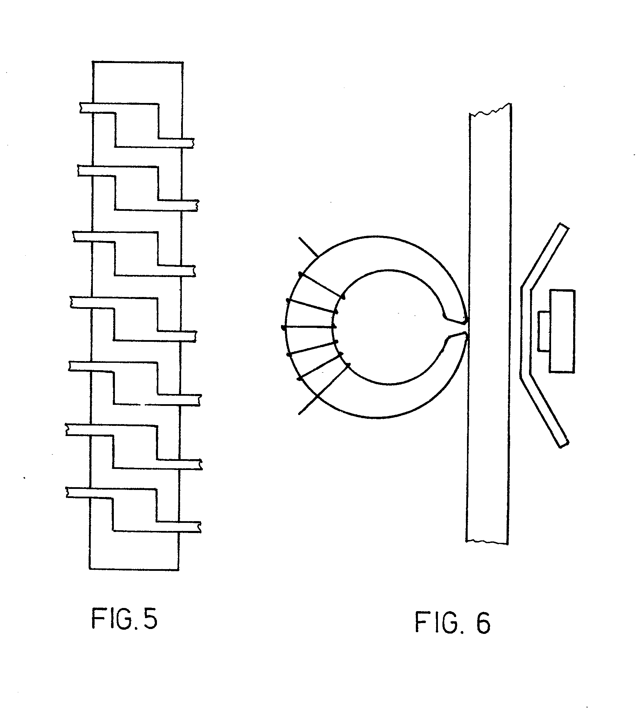

In allen Fällen darf das System der Signalfelder durch den Kopiervorgang nicht nennenswert gestört werden. Dieses System läßt sich in verschiedenster Weise erzeugen. Eine Ausführungsform kann ein System von Strömen sein, die durch geeignet angeordnete Leiterbahnen im Wandler (Figur 5) fließen und so für jedes Element das Signalfeld erzeugen. Eine weitere vorteilhafte Ausführungsform eines Wandlers ist das System von magnetischen Elementen oder der Streifen magnetischen Materials, das eingangs als

AG 1776

magnetisches Register bezeichnet wird. Ist die Koerzitivkraft dieser Speicherelemente des Registers deutlich höher,
z. B. 48 KAm$^{-1}$, als die des Aufzeichnungsträgers, z. B.
24 KAm$^{-1}$, so ist die Wechselfeldübertragung realisierbar.

Eine Verschiedenheit der Curie-Punkte gestattet die Anwendung
des thermischen Kopiereffektes. Ordnet man den Wechselfeldliefernden Kopf hinter dem Aufzeichnungsträger an, so kann
die Information des magnetischen Registers durch eine leitfähige Zwischenschicht (Figur 6) vor dem wirkenden Wechselfeld geschützt werden, während das statische Signalfeld ungehindert zu wirken vermag. Damit kann die Notwendigkeit, mit
unterschiedlicher Koerzitivkraft zu arbeiten, entfallen.
Die leitfähige Zwischenschicht kann z. B. aus Silber oder
Kupfer bestehen. Verhindert man einen Übertritt der Erwärmung
aus dem Kopiermaterial in das magnetische Register durch
thermische Schutzschichten z. B. aus Keramik und/oder durch
Reflexion der Strahlung, so läßt sich der thermische Effekt
auch bei geringeren Unterschieden der Curie-Punkte anwenden.
Die aufzuzeichnende Information muß im Fall eines
magnetischen Registers vor der Übertragung als Magnetisierungsmuster des Registers erzeugt werden. Dieses "Laden"
des Registers, mit dem eine Löschung der vorhandenen Daten
einhergeht, läßt sich in verschiedener Weise ermöglichen:
Getrennt für jedes Element durch eine Strombahn nahe dem
Element, so daß die freie Wahl besteht, die Elemente
gleichzeitig oder in beliebiger Reihenfolge zu laden. Eine
vorteilhafte Ausführungsform unterstützt die Wirkung dieser
Signalströme durch Möglichkeiten, die Koerzitivkraft der
Registerelemente zu überwinden, nämlich durch gezielte
Erwärmung oder durch Wechselfeldeinfluß. Hier bietet sich
wiederum ein Wechselfeld-liefernder Kopf bzw. eine geeignete
Strahlungserwärmung an. In beiden Fällen ist wegen des
Fehlens einer Bewegung eine Zeitsteuerung des Wechselfeldes
bzw. der Strahlung vorzusehen. Da die Information zunächst
seriell vorliegt, ist es zweckmäßig, das Laden des
Registers ebenfalls seriell zu gestalten, um den Auf-

AG 1776

wand innerhalb der Wandlerstation zu reduzieren. Auch hierfür ist der Kopierprozeß geeignet. Man bietet sämtlichen Elementen des Registers mit einer Strombahn, die auf alle Elemente gleich stark wirkt, oder auch durch einen üblichen Magnetkopf die momentane Information an. Es ist dafür zu sorgen, daß zu diesem Zeitpunkt nur das Element, das diese Information speichert, in seiner Koerzitivkraft überwunden wird, damit gelangt diese Information genau an den richtigen Platz. Die gezielte Beeinflussung der Registerelemente ist auf verschiedene Weise möglich. Geschieht die Überwindung der Koerzitivkraft der Registerelemente durch Strahlungserwärmung, so läßt sich die Strahlung durch optische Mittel, z. B. durch Linsen, auf die Größe eines Elementes beschränken und der sich so konzentrierte Brennfleck im Takt der einlaufenden Daten von Element zu Element verschieben.

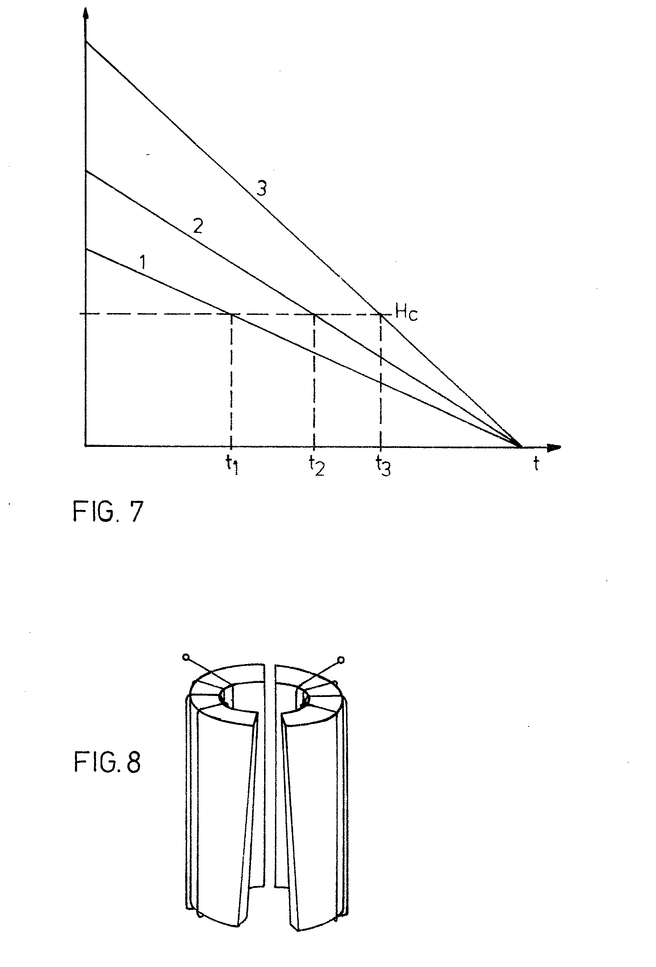

Wendet man die Wechselfeldmethode an, bei der die Information während des abklingenden Teils des Wechselfeldimpulses eingeschrieben wird, dann wird durch einen räumlich inhomogenen Verlauf der Feldstärke der Zeitpunkt des Einschreibens für jedes Registerelement gesondert festgelegt. Diese Ausführungsform beruht auf der bekannten Tatsache, daß die Übernahme der Information in dem Augenblick erfolgt, in dem die Wechselfeldamplitude gerade der Koerzitivkraft des Speicherelementes entspricht. Man kann das Wechselfeld in der Ebene der Speicherelemente ortsabhängig gestalten, dann erfolgt der Durchgang durch die Koerzitivkraft für jedes Element zu einem anderen Zeitpunkt t1, t2, t3 (siehe Figur 7) mit der Wirkung, daß die allen Elementen gleichzeitig angebotenen Daten nacheinander sortiert und in jeweils einem einzigen Element gespeichert werden.

Die Gestaltung des inhomogenen Wechselfeldes kann durch die geometrische Anordnung des Wechselfeldkopfes über den Abstand zu den Elementen, also durch eine schräge Montage erfolgen. Es ist aber auch eine parallele Montage eines

0060478

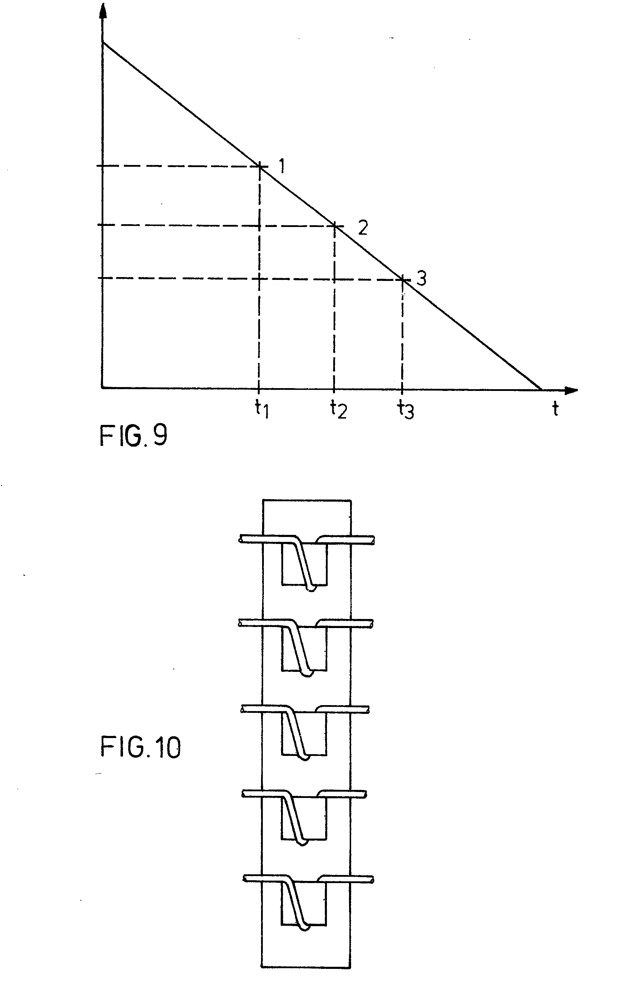

Kopfes möglich, wenn dessen Sprechspalt oder Scherungsspalt unterschiedliche Öffnungen aufweist, das heißt im einfachsten Fall einen keilförmigen Verlauf besitzt. Eine weitere Möglichkeit mit einer Datenleitung oder einem Datenkopf das Register seriell zu laden, besteht darin, die Folge der Registerelemente mit unterschiedlicher Koerzitivkraft, wie das Diagramm gemäß Figur 9 zeigt, auszurüsten. Auch durch diese Maßnahme in Verbindung mit einem homogen wirkenden Wechselfeldimpuls gelingt es, den Zeitpunkt der Informationsübernahme aus der Datenleitung in das magnetische Register für jedes Registerelement getrennt (Figur 9) festzulegen.

Der Übergang von einer Einzelansteuerung aller Elemente hat den Nachteil, daß zahlreiche Verstärker und Leitungen benötigt werden zur seriellen Ansteuerung über eine einzige Datenleitung und einen anhysteretischen Kopierprozeß, kann auch stufenweise erfolgen, in der Art, daß nur Gruppen von Elementen seriell geladen werden, die Gruppen aber gemeinsam gleichzeitig angesteuert werden. Mit dieser Maßnahme ist eine Optimierung zwischen dem Zeitbedarf beim Ladevorgang und dem Aufwand bei der Integration des Registers möglich.

In Weiterführung des Verfahrensprinzipes des seriellen Ladens ist es zweckmäßig, den Schreibvorgang ohne Zwischenschaltung eines magnetischen Registers direkt aus der Datenleitung auf den Aufzeichnungsträger ablaufen zu lassen. Da die Kopiereigenschaften der magnetischen Speicherschicht denen der Registerelemente ähnlich sind, kann durch Anwendung eines räumlich und zeitlich inhomogenen Wechselfeldes in Kombination mit einer Datenleitung oder einem Datenkopf, deren Wirkung die ganze Sprosse, die mit Information zu belegen ist, erfaßt, ein serieller Schreibvorgang quer über den bewegten oder ruhenden Aufzeichnungsträger ausgelöst werden. Möglich ist ferner die Anwendung der örtlichen Erhitzung auch zur Übertragung der Daten aus der einkanaligen Leitung in den Aufzeichnungsträger. Ein gesteuerter Brennfleck einer Strahlungsquelle wird im Rythmus der einlaufenden Daten quer über dem Aufzeichnungsträger verschoben. Jedes Flächenelement wird zu einem festgelegten Zeitpunkt unter den Einfluß der Strahlung über den Curie-Punkt erwärmt und übernimmt beim Abkühlen die gerade anstehende Information aus dem magnetischen Streufeld der Datenleitung oder des Datenkopfes.

Nach Darstellung der verschiedenen Wandlerstationen zum Aufbringen der Information auf den Aufzeichnungsträger wird nun die erfindungsgemäße Anwendung für den Vorgang der Rückgewinnung der Information (Lesen) beschrieben. Die Information liegt, wie vorhin dargestellt, als orthogonales Muster von magnetisierten Elementen des Aufzeichnungsträgers vor. Der Lesevorgang soll nun die Information einer Sprosse entnehmen und in eine elektrische Signalfolge verwandeln. Dabei soll es sich um digitale Daten handeln, wobei es das Vorhandensein und/oder die Richtung der Magnetisierung eines Speicherelementes des Aufzeichnungsträgers zu erkennen gilt. Als erster Schritt des Lesevorgangs wird die Information einer Sprosse parallel in ein magnetisches Register übertragen, das wiederum aus einer Folge von Elementen oder einem durchgehenden Streifen magnetischen Materials besteht. Die Übertragung benutzt die Wirkung der Streufelder der Aufzeichnung auf das magnetische Register, wenn nötig unterstützt durch einen anhysteretischen Kopierprozeß, durch ein Wechselfeld oder durch eine lokale Erhitzung der Registerelemente über den Curie-Punkt. Dabei muß magnetischer Kontakt zwischen Aufzeichnungsträger und Register herrschen, damit die Streufelder der Aufzeichnung wirken können. Auch hier müssen geeignete Verhältnisse hinsichtlich der Koerzitivkräfte bzw. Curie-Punkte von Aufzeichnungsträger und Register vorliegen oder aber die Wirkung von Wechselfeld oder Wärmequelle müssen durch geeignete Abschirmungen wie beschrieben vom Aufzeichnungsträger ferngehalten werden.

AG 1776

Eine zeitlich ablaufende, serielle Übertragung ist mit den gleichen Maßnahmen eines zeitlich-räumlich inhomogenen Wechselfeldes oder eines gesteuerten Brennflecks zu erreichen, sofern dies erforderlich erscheint.

Als zweiter Schritt nach der Übertragung in das Register folgt die Umwandlung der magnetischen Information in elektrische Signale. Eine erste Umwandlungsart nutzt die magnetischen Wirkungen der einzelnen Registerelemente getrennt aus und verwandelt sie in elektrische Spannungswerte. Ohne Eingriff in die Magnetisierung der Registrierelemente (zerstörungsfrei) sind verschiedene physikalische Phänomene anwendbar, um dieses Ziel zu erreichen.

Die Anordnung eines magnetoresistiven Sensors in nächster Nähe jedes Elementes oder die Ausgestaltung der Elemente selbst als magnetoresistive Sensoren benutzt Widerstandsänderungen durch das Streufeld der Information. Mit polarisiertem Licht kann der Faraday- bzw. Kerr-Effekt zur Signalgewinnung genutzt werden. Die Auswirkung der magnetischen Kräfte kann mit piezoelektrischen Aufnehmern erfaßt werden. Die Verstimmung von Schwingkreisen (Oberwellensonde) liefert ebenfalls einen umwandelnden Effekt. Im Grunde können alle Methoden, die zur Messung von statischen Magnetfeldern üblich sind, benutzt werden. Eine andere Möglichkeit der Umwandlung in elektrische Signale ist die absichtliche Magnetisierung der Registerelemente in eine gemeinsame Richtung nach der Übernahme der Information. Dabei nehmen nur die Elemente an der Ummagnetisierung teil, deren Magnetisierung durch den Übernahmeprozeß eine andere Richtung eingenommen hatte, als sie jetzt allen Elementen aufgeprägt wird. Eine solche Änderung einer Magnetisierung kann induktiv über Leiterschleifen, die den einzelnen Elementen zugeordnet sind (Fig. 10), in elektrische Impulse verwandelt werden, die in Leseverstärkern aufbereitet werden können. Magnetisiert man das ganze Register in eine Richtung,

AG 1776

0060478

was durch einen kurzen Gleichstromimpuls in einem auf alle Elemente gleichstark wirkenden Magnetkopf oder in einer gleichwirkenden Leiterbahn bewirkt wird, so entstehen die Leseimpulse gleichzeitig an den Leseleitungen aller ummagnetisierten Elemente. Damit sind das Fehlen und das Auftreten eines Impulses im richtigen Zeitpunkt als die beiden logischen Zustände der Information zu erkennen.

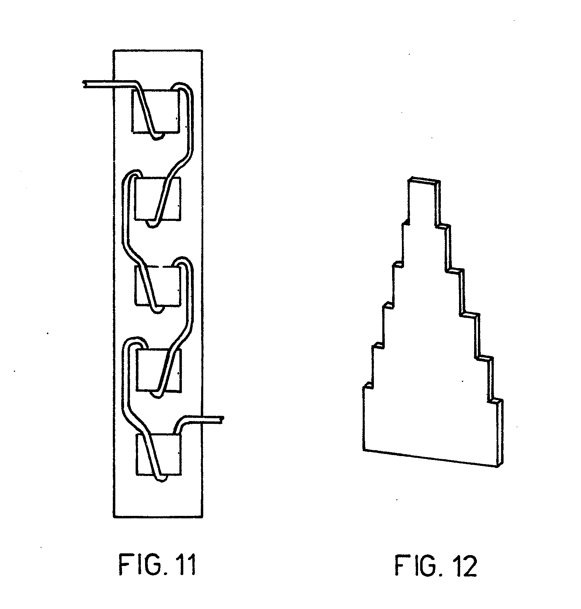

Es besteht aber auch beim Lesen die Möglichkeit, die Information seriell an einer Datenleitung abzunehmen. Dazu ist es nötig, die Registerelemente nacheinander umzumagnetisieren und eine einzige induktive Schleife, wie in Fig. 11 angezeigt, anzuordnen, die von allen Elementen gleichartig beeinflußt wird. Die zeitlich versetzte Ummagnetisierung kann auf verschiedene Weise erreicht werden. Eine Strombahn mit unterschiedlichem Abstand zu den einzelnen Registerelementen oder mit unterschiedlichem, stufenförmig verlaufendem Querschnitt (Fig. 12) erzeugt am Ort jedes Elementes ein spezifisches Magnetfeld. Läßt man in der Strombahn einen monoton steigenden Gleichstrom fließen, so wird in jedem Element zu einer spezifischen Zeit die Koerzitivkraft überschritten und die Ummagnetisierung eingeleitet. Eine vergleichbare Wirkung bringt auch ein üblicher Ringkernkopf, dessen Spalt unterschiedlichen Abstand zu den Registerelementen besitzt oder dessen Spaltbreite für den Sprech- und/oder Scherungsspalt einen entsprechenden örtlichen Verlauf aufweist, wie in Fig. 8 gezeigt. Erfolgt die Ummagnetisierung andererseits durch magnetische Wirkung eines Kopfes oder einer Strombahn, die am Ort jedes Registerelementes gleichstark ausgeübt wird, entsteht trotzdem eine serielle Ummagnetisierung, wenn die Koerzitivkraft jedes Elementes eine spezifische Größe aufweist. Ist zum Beispiel die Koerzitivkraft jedes Elementes um einen konstanten Wert größer bzw. kleiner als die seiner Nachbarelemente (linearer Anstieg) und steigt der Strom in der Ummagnetisierungseinrich-

AG 1776

tung zeitlinear an, so folgen die Impulse in der Leseleitung äquidistant. Die Information wird also mit konstanter Rate ausgelesen. Eine andere Möglichkeit, einen zeitlich versetzten Induktionsimpuls zu erzeugen, liegt in der Erwärmung über den Curiepunkt. Erzeugt man die Erwärmung lokal durch einen Brennfleck, so kann durch gesteuerte Ablenkung (scannen) die Magnetisierung jedes Elementes in richtiger Reihenfolge geändert werden und so ein Spannungsimpuls erzeugt werden, dessen Polarität Auskunft über die eingespeicherte Information gibt (zerstörendes Lesen). Der verwandte Aufbau der Register beim Lesen und Schreiben bietet weiterhin die Möglichkeit, eine kombinierte Station für beide Funktionen einzusetzen. Dazu ist nötig, daß die magnetischen Streufelder von Register und Aufzeichnungsträger zwischen den Partnern ungehindert ausgetauscht werden können, die Überwindung der Koerzitivkraft jedoch für beide Partner getrennt vorgenommen wird.

Im Falle des anhysteretischen Wechselfeldprozesses geschieht dies durch eine leitfähige Abschirmung zwischen den Partnern und getrennte Wechselfelderzeugung von beiden Seiten aus, also sowohl von der Aufzeichnungsseite wie auch von der Registerseite her. Im Falle der Nutzung der Curiepunkte ist thermische Trennung der Partner und getrennt steuerbare Erwärmung für Aufzeichnungsträger und Register erforderlich. Es können auch beide Arten des anhysteretischen Prozesses angewandt werden, indem der Schreibvorgang durch Wechselfeldbeeinflussung der magnetischen Schicht des Aufzeichnungsträgers erfolgt, der Lesevorgang aber die Koerzitivkrafterniedrigung durch Erwärmung der Registerelemente nutzt.

Der Gegenstand der Erfindung ist nicht nur auf die Information durch digitale, zweiwertige Daten anwendbar. Besonders bei Videoanwendung ist es wünschenswert, die Information in jedem Speicherelement zu erhöhen, um den Speicherplatzbedarf nicht zu hoch zu treiben. Als Übergangsstufe kann von der zweiwertigen Logik auf eine mehrwertige, etwa vierstufige Logik übergegangen werden. Eine Speicherung im Aufzeichnungsträger

AG 1776

sieht dann zwei Magnetisierungsstufen nach der Stärke und zwei nach der Richtung vor. Zwei Speicherelemente können damit 16 Helligkeitsstufen eines Bildpunktes speichern. Mit dieser Art der Informationsspeicherung folgt zwingend, daß die für die Übertragung benutzten Register ebenfalls aus Elementen bestehen, die zu mehrstufigen Zuständen, in unserem Beispiel also zu zwei Zuständen der Magnetisierungshöhe und zwei der Magnetisierungsrichtung befähigt sind. Dies ist durch mehrfach übereinander angeordnete magnetische Schichten oder die Erzeugung eines Koerzitivkraftspektrums in jedem Element erreichbar. Hier ist der Übergang zur echten Analogspeicherung der Signalwerte gegeben, wenn die Elemente der Register wegen der Form ihrer Hystereseschleifen zur Speicherung von kontinuierlichen Magnetisierungswerten benutzt werden können. Die gewünschten Hystereseschleifen, deren Form von einer Koerzitivkraftverteilung der Bestandteile eines Registerelementes herrührt, lassen sich durch Verwendung von magnetischen Schichten erzeugen, die aus einer Vielzahl von kleinsten magnetischen Partikeln ähnlich der Pigmente eines Magnetbandes bestehen. Im einfachsten Fall kann auf den unmagnetischen Träger ein magnetischer Lack in der für das Register gewünschten Geometrie und Dicke aufgebracht werden.

AG 1776

Patentansprüche:  — 2 c —  0060478

1. Verfahren zur Aufzeichnung und Wiedergabe von elektrischen Signalen unter Verwendung von magnetischen Schichten, bestehend aus einer Schreib- und Lesestation, die die Umwandlung von magnetischer in elektrische Information bzw. umgekehrt durchführt, wobei ein aufzuzeichnendes Signal in gleichen Zeitabständen abgefragt und der ermittelte Signalwert als Magnetisierung eines Flächenelementes der Aufzeichnungsschicht niedergelegt wird bzw. im Falle digitaler Signale entsprechend der Länge des digitalen Wortes in einer Gruppe gleichartiger Flächenelemente bit für bit aufgezeichnet wird und bei schnell einlaufenden Daten der Datenfluß in mehrere Kanäle untergeteilt wird, die gleichzeitig aufgezeichnet werden, so daß eine mäßig schnelle Bewegung des Aufzeichnungsträgers genügt, um den Datenfluß zu verarbeiten, dadurch gekennzeichnet, daß beim Aufzeichnungsvorgang für jeden Signalwert ein rund oder rechteckig begrenztes Speicherelement benutzt wird, dessen Dimension in Richtung des Transportes des Aufzeichnungsträgers und quer dazu von gleicher Größenordnung ist.

2. Verfahren nach Anspruch 1 dadurch gekennzeichnet, daß die aufzuzeichnende digitale Information in einer Schreibstation als System von Signalfeldern in geometrischer Anordnung und zeitlicher Abfolge vorliegt und die Übertragung in den Aufzeichnungsträger durch einen anhysteretischen magnetischen Kopierprozeß erfolgt, wobei die Koerzitivkraft der Speicherschicht entweder durch thermische Einwirkung oder durch Anlegung eines Wechselfeldes geeigneter Frequenz, Stärke und Zeitdauer überwunden wird.

3. Verfahren nach Anspruch 1 - 2 dadurch gekennzeichnet,

AG 1776

daß die Übertragung der Information aus einer Schreibstation in den Aufzeichnungsträger für alle Speicherelemente gleichzeitig parallel erfolgt.

4. Verfahren nach Anspruch 1 - 3 dadurch gekennzeichnet, daß die Signalfelder durch Strombahnen in der Schreibstation gebildet werden.

5. Verfahren nach Anspruch 1 - 4 dadurch gekennzeichnet, daß die Signalfelder in der Schreibstation durch eine Mehrzahl von magnetischen Elementen oder einen durchgehenden Streifen aus magnetischem Material, ein sogenanntes magnetisches Register, entsprechend der Gruppe gleichzeitig zu beschreibender Speicherflächen des Aufzeichnungsträgers gebildet werden.

6. Verfahren nach Anspruch 5 dadurch gekennzeichnet, daß der Magnetisierungszustand des magnetischen Registers durch ein System von gleichzeitig fließenden Signalströmen in der Nähe der Registerelemente erzeugt wird.

7. Verfahren nach Anspruch 5 dadurch gekennzeichnet, daß der Magnetisierungszustand des magnetischen Registers durch ein System von gleichzeitig fließenden Signalströmen, das bei der Überwindung der Koerzitivkraft des Registers durch einen anhysteretischen Vorgang unterstützt wird, sei es durch Erwärmung oder Einwirkung eines Wechselfeldes, erzeugt wird.

8. Verfahren nach Anspruch 5 dadurch gekennzeichnet, daß der Magnetisierungszustand der einzelnen Elemente des magnetischen Registers in zeitlicher Abfolge (seriell) der aufzuzeichnenden Information angepaßt wird durch die kombinierte Wirkung einer Signalleitung, deren Magnetfeld gleichstark auf alle Elemente wirkt, und eines anhysteretischen räumlich und zeitlich unterschiedlich wirksamen

AG 1776

Vorganges erfolgt.

9. Verfahren nach Anspruch 5 dadurch gekennzeichnet, daß der Magnetisierungszustand der einzelnen Elemente des magnetischen Registers in zeitlicher Abfolge verläuft, und zwar durch unterschiedliche Ausbildung der Koerzitivkraft der einzelnen Elemente des magnetischen Registers.

10. Verfahren nach Anspruch 1 und 2 dadurch gekennzeichnet, daß die Übertragung der Information in den Aufzeichnungsträger direkt in zeitlicher Abfolge durchgeführt wird, indem eine Datenstation bestehend aus einem Magnetkopf oder einer Strombahn gleichstark auf den gesamten betrachteten Bereich des Aufzeichnungsträgers wirkt und ein zeitlich wie räumlich unterschiedlich gestalteter anhysteretischer Vorgang die Überwindung der Koerzitivkraft des Aufzeichnungsträgers steuert.

11. Verfahren nach Anspruch 1 und 5 dadurch gekennzeichnet, daß eine Lesestation ein magnetisches Register enthält, in das die digitale Information vom Aufzeichnungsträger durch die Wirkung ihrer Streufelder gegebenenfalls unterstützt durch einen anhysteretischen Vorgang seriell oder parallel übertragen wird.

12. Verfahren nach Anspruch 11 dadurch gekennzeichnet, daß die magnetisch im Register gespeicherte Information zerstörungsfrei in elektrische Signale verwandelt wird.

13. Verfahren nach Anspruch 11 dadurch gekennzeichnet, daß die magnetisch im Register gespeicherte Information zerstörend durch induktive Abnahme des Leseimpulses an allen Registerelementen gleichzeitig in elektri-

AG 1776

sche Signale verwandelt wird, indem ein Magnetisierungsprozeß alle Elemente gleichzeitig erfaßt.

14. Verfahren nach Anspruch 1 und 13 dadurch gekennzeichnet,
daß ein Magnetisierungprozeß alle Elemente des
magnetischen Registers gleichzeitig erfaßt und die an
jedem betroffenen Element entstehende Induktionsspannung
durch getrennte Leseschleifen abgenommen wird.

15. Verfahren nach Anspruch 1 und 13 dadurch gekennzeichnet,
daß die magnetisch im Register gespeicherte Information
in zeitlicher Abfolge mit einer von allen Elementen
des Registers gleich beeinflußten Leseschleife als
induktiver Impuls elektrisch gelesen wird, indem der
Magnetisierungszustand der einzelnen Elemente nacheinander geändert wird.

16. Verfahren nach Anspruch 15 dadurch gekennzeichnet,
daß die Änderung des Magnetisierungszustandes der
einzelnen Elemente des magnetischen Registers nacheinander zeitlich und räumlich durch einen inhomogen
wirkenden Magnetisierungsvorgang erfolgt.

17. Verfahren nach Anspruch 15 dadurch gekennzeichnet,
daß die Änderung des Magnetisierungszustandes der
einzelnen Elemente des magnetischen Registers nacheinander durch einen räumlich homogen wirkenden Magnetisierungsvorgang und eine unterschiedliche Koerzitivkraft der einzelnen Elemente erfolgt.

18. Verfahren nach Anspruch 1 und 16 dadurch gekennzeichnet,
daß die magnetisch im Register gespeicherte Information
in zeitlicher Abfolge als induktiver Impuls elektrisch
gelesen wird, indem ein räumlich und zeitlich inhomogenes
Wechselfeld auf die Registerelemente wirkt.

AG 1776

0060478

19. Verfahren nach Anspruch 1 und 16 dadurch gekennzeichnet, daß die magnetisch im Register gespeicherte Information durch eine räumlich und zeitlich gesteuerte Erwärmung geändert und der jeweils entstehende Leseimpuls induktiv abgenommen wird.

20. Verfahren nach Anspruch 1, 5 und 11 dadurch gekennzeichnet, daß Schreib- und Lesestation zusammengefaßt und mit einem gemeinsamen magnetischen Register ausgestaltet sind.

21. Verfahren nach Anspruch 1 und 20 dadurch gekennzeichnet, daß die Koerzitivkraft im Register und im Aufzeichnungsträger getrennt durch einen gleichartigen anhysteretischen Vorgang überwunden wird.

22. Verfahren nach Anspruch 1 und 20 dadurch gekennzeichnet, daß die Koerzitivkraft im Register und im Aufzeichnungsträger getrennt durch verschiedenartige anhysteretische Vorgänge überwunden wird.

23. Verfahren nach Anspruch 1, 5 und 11 dadurch gekennzeichnet, daß die Wandlerstationen magnetische Register oder Strombahnen besitzen, deren Signalfelder mehr als zwei diskrete Werte annehmen können.

AG 1776

FIG. 1

FIG. 2

FIG. 3

FIG. 4

FIG. 5

FIG. 6

FIG. 7

FIG. 8

0060478
5/6

FIG. 9

FIG. 10

FIG. 11

FIG. 12